# EUROPEAN PATENT SPECIFICATION

(11) **EP 4 623 228 B1**
(45) Date of publication and mention of the grant of the patent: **12.08.2026**
(21) Application number: 24702102.5
(22) Date of filing: 25.01.2024
(51) Int. Cl.: F16J 15/3248, F16H 25/22, F16H 25/24

(54) **WIPER SEAL FOR A BALL SCREW ACTUATOR**
WISCHERDICHTUNG FÜR EINEN KUGELGEWINDETRIEB
JOINT D'ESSUIE-GLACE POUR ACTIONNEUR À VIS À BILLES

(30) Priority: 25.01.2023 US 202363481572 P; 23.01.2024 US 202418420707
(43) Date of publication of application: 01.10.2025
(73) Proprietor: Trelleborg Sealing Solutions U.S., Inc., Fort Wayne, IN 46803 (US); Trelleborg Sealing Solutions Germany GmbH, 70565 Stuttgart (DE)
(72) Inventor: WAGONER, Samuel David, Falmouth, Indiana 46127 (US)
(74) Representative: Kohler Schmid Möbus Patentanwälte
(86) International application number: PCT/EP2024/051704
(87) International publication number: WO 2024/156779

(56) References cited:
- DE-A1- 2 537 713
- JP-A- H0 544 810
- JP-B2- 4 482 168
- US-A- 4 053 167
- US-B2- 10 975 941

## Description

### FIELD OF THE INVENTION

The present invention generally relates to seals. More particularly, the present invention relates to a wiper seal assembly for a ball screw actuator used in aerospace and industrial applications.

### BACKGROUND OF THE INVENTION

A wiper seal assembly according to the preamble of claim 1 is known e.g. from DE 25 37 713 A1.

Ball screw actuators need seals to seal grease within the actuator. Furthermore, these seals should be able to break externally formed ice while keeping external debris from ingressing (i.e., entering) into the actuator and other flight systems. Current solutions that have been designed are not fully successful in applications with high temperature variability and have had issues with drag. The present invention overcomes these drawbacks.

Prior art publication and patents include but are not limited to the following: EP 3 392 526 B1; EP 3 428 481 B1; US 4,905,533; US 10,612,633; KR 101 584 435 B1; US 697 639 9B2; JP 492 362 4B2; JP 492 362 4B2; US 201 403 524 70A1; JP 364 759 7B2; US 802 512 8B2; US 490 553 3A; and EP 3 428 481 B1.

### SUMMARY OF THE INVENTION

In view of this, a wiper seal assembly for sealing a ball screw actuator in accordance with claim 1 is provided. A seal element 12 is annularly disposed about a longitudinal axis 13. The seal element defines a front side 14 opposite a back side 15, where the front and back sides are generally perpendicular to the longitudinal axis. The seal element defines an outside circumferential surface 16 opposite an inside circumferential surface 17, where the outside and inside circumferential surfaces are generally parallel with the longitudinal axis. The inside circumferential surface comprises a first helically shaped extension 18 having a first pitch 50 extending towards the longitudinal axis. The first helically shaped extension is configured to be disposed within a roller ball screw thread 19 of a shaft 20 of the ball screw actuator. The shaft is configured to be aligned along the longitudinal axis. There is a clearance 51 between the first helically shaped extension and the roller ball screw thread.

The inside circumferential surface also comprises at least one wiping bead 52 being a second helically shaped extension 53 having a second pitch 54 extending towards the longitudinal axis. The at least one wiping bead is disposed at least partially over the first helically shaped extension. The at least one wiping bead makes contact with the roller ball screw thread of the shaft of the ball screw actuator.

A cylindrical ring 55 is annularly disposed about the longitudinal axis and extends a distance 56 along the longitudinal axis. The cylindrical ring defines a front side 57 opposite a back side 58, where the front and back sides are generally perpendicular to the longitudinal axis. The cylindrical ring defines an outside circumferential surface 59 opposite an inside circumferential surface 60, where the outside and inside circumferential surfaces being generally parallel with longitudinal axis. The cylindrical ring is in contact with and at least partially disposed about the seal element. The seal element is at least partially bonded to the cylindrical ring.

According to a preferred embodiment, the seal element may have a first coefficient of thermal expansion 61 and the cylindrical ring may have a second coefficient of thermal expansion 62. The first coefficient of thermal expansion of the cylindrical ring may be larger than the second coefficient of thermal expansion of the cylindrical ring.

Alternatively, the seal element may be made of an elastomer. For example, the seal element may be made of fluorosilicone, fluorovinylmethylsiloxane rubber (FVMQ), nitrile (NBR), hydrogenated nitrile (HNBR), fluorocarbon (FKM), silicone (VMQ), liquid silicone resin (LSR), thermoplastic elastomer (TPE) and/or any combination thereof. The seal element may have a Shore A hardness range of 40 to 80.

Additionally, the cylindrical ring may be made of a metal. Alternatively, the cylindrical ring may be made of stainless steel, steel, aluminum, plastic and/or any combination thereof.

According to a preferred embodiment, the first pitch of the first helically shaped extension and second pitch of the second helically shaped extension may be different. Alternatively, the first pitch of the first helically shaped extension and the second pitch of the second helically shaped extension may be in a similar helical direction 63. Alternatively, the first pitch of the first helically shaped extension and the second pitch of the second helically shaped extension may be in an opposite helical direction 64. Alternatively, the first pitch of the first helically shaped extension and the second pitch of the second helically shaped extension may be the same.

According to a preferred embodiment, an ice breaker element 23 may be annularly disposed about the longitudinal axis, the ice breaker element defining a front side 24 opposite a back side 25, the front and back sides being generally perpendicular to the longitudinal axis. The ice breaker element may define an outside circumferential surface 26 opposite an inside circumferential surface 27, the outside and inside circumferential surfaces being generally parallel with longitudinal axis. The inside circumferential surface comprises a third helically shaped extension 28 extending towards the longitudinal axis, wherein the third helically shaped extension is configured to be disposed within the roller ball screw thread of the shaft of the ball screw actuator. The third helically shaped extension extends to the front side of the ice breaker element forming an ice breaker lip 29. When included, the seal element is disposed adjacent to the ice breaker element with the back side of the seal element being adjacent to the back side of the ice breaker element. It is understood from this teaching that the first helically shaped extension is helically aligned in comparison to the third helically shaped extension, wherein both the first and third helically shaped extensions are configured to be disposed within the roller ball screw thread of the shaft of the ball screw actuator. An edge 33 of the ice breaker lip is configured to be at or less than 0.005 inches (0.13 millimeters) from the roller ball screw thread of the shaft of the ball screw actuator. The seal element and the ice breaker element could be different materials, such that they are not the same materials. Furthermore, the ice breaker element may comprise aluminum bronze and/or According to a preferred embodiment, an annular bead 65 may be disposed about the longitudinal axis and extending from the front side of the seal element.

According to a preferred embodiment, when the wiper seal assembly is installed between an outer housing 41 and the shaft of the ball screw actuator, the front side of the seal element is configured to be disposed towards a grease side 42 and the rear side of the seal element is configured to be disposed towards an environmental side 43.

According to a preferred embodiment, at least one clocking feature 66 may extend radially to the longitudinal axis from the outside circumferential surface of the cylindrical ring. The at least one clocking feature is configured to be disposed within at least one recess 47 formed in an outer housing 41 and mechanically locks in rotation the cylindrical ring and seal element in comparison to the outer housing.

Additionaly, at least one second clocking feature 46 may extend radially to the longitudinal axis from the outside circumferential surface of the ice breaker element. The at least one second clocking feature is configured to be disposed within the at least one recess 47 formed in the outer housing 41 and mechanically locks in rotation the ice breaker element in comparison to the outer housing.

### BRIEF DESCRIPTION OF THE DRAWINGS

The accompanying drawings illustrate the invention. In such drawings:
FIGURE 1 is an isometric view of an embodiment of a wiper seal assembly of the present invention;
FIGURE 2 is a sectional view of the structure of FIG. 1 taken along lines 2-2;
FIGURE 3 is an enlarged sectional view taken along lines 3-3 from FIG. 2 now showing the internal shaft of the ball screw actuator;
FIGURE 4 is an enlarged sectional view taken along lines 4-4 from FIG. 2 now showing the outer housing of the ball screw actuator;
FIGURE 5 is an enlarged sectional view of the structure of FIG. 1 now showing the internal shaft and outer housing of the ball screw actuator along with an ice breaker element;
FIGURE 6 is an enlarged sectional view of the structure of FIG. 1 now showing another embodiment of the present invention having the internal shaft and outer housing of the ball screw actuator along with an ice breaker element;
FIGURE 7A is a theoretical plan view of the inside circumferential surface of the seal element shown in FIG. 2 if the inside circumferential surface was cut open and laid flat;
FIGURE 7B is another theoretical plan view similar to FIG. 7A, now showing that while the first and second helically shaped extensions have different pitches they may be in a similar helical direction; and
FIGURE 7C is another theoretical plan view similar to FIGS. 7A and &B, now showing that the first pitch of the first helically shaped extension and the second pitch of the second helically shaped extension may be the same pitch.

### DETAILED DESCRIPTION OF EMBODIMENTS OF THE INVENTION

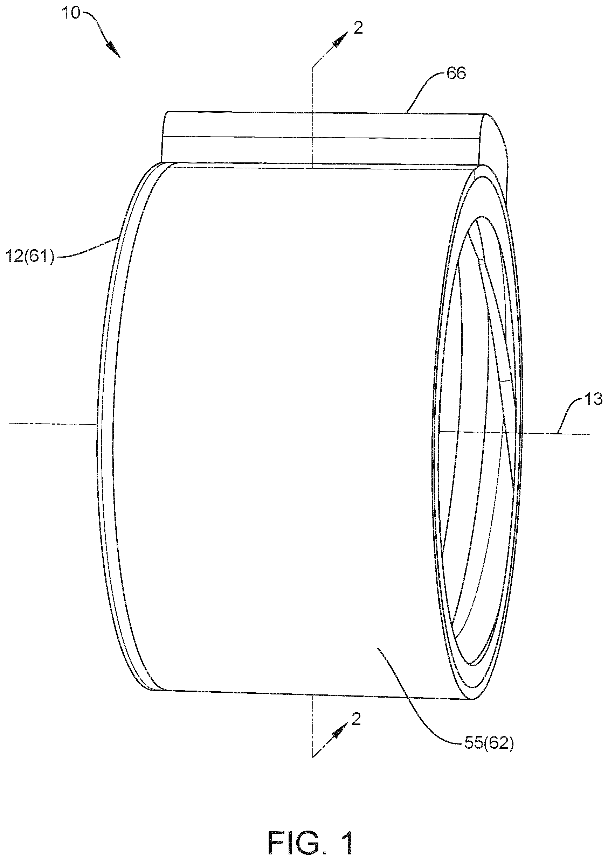

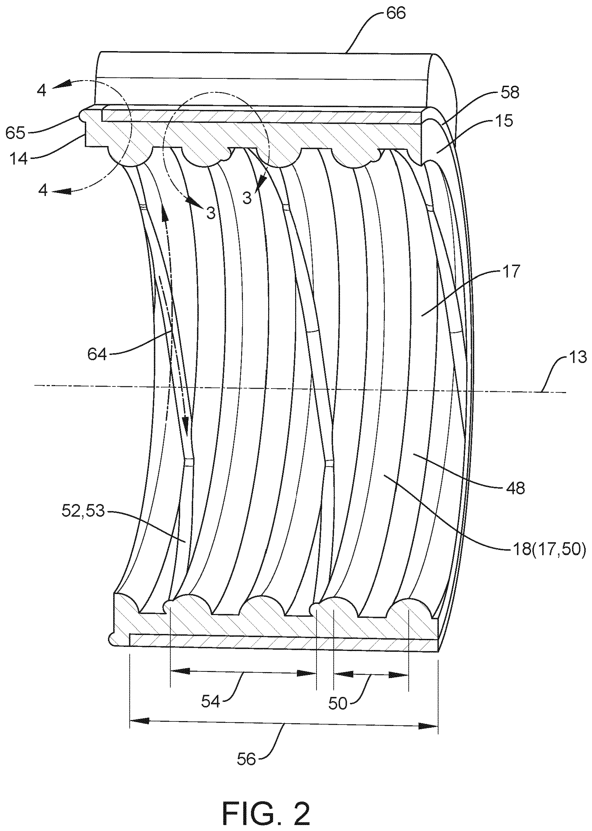

FIGURE 1 is an isometric view of the present invention. FIGURE 2 is a sectional view through the structure of FIG. 1. A metal ring surrounds the seal. The metal ring helps support the seal during shrinkage in cold testing. The metal ring can be made as a stainless-steel sleeve for the temperature extremes and corrosion resistance. The metal ring could also be made from steel, aluminum, plastic or any combination thereof.

Inside of the metal ring is elastomer seal, such as fluorosilicone, fluorovinylmethylsiloxane rubber (FVMQ), nitrile (NBR), hydrogenated nitrile (HNBR), fluorocarbon (FKM), silicone (VMQ), liquid silicone resin (LSR), thermoplastic elastomer (TPE) or any elastomer appropriate for the application environment. The hardness will likely be in the 40-80 Shore A range. The inside of the seal has a main helical thread that is configured to match the threads of the ball screw actuator with a clearance between the elastomer and the ball screw shaft.

The seal is a bi-directional pumping seal with light contact along a small wiping bead to help with friction reduction. This seal is bidirectional unlike prior art designs and has a modular design that can be customized to include an ice scraper.

This seal of the present invention is bidirectional, because as the ball screw shaft turns and extends the small, counter thread wipes the grease off the shaft and pushes it back into the grease reservoir. As it retracts the same counter thread wipes dust and water off the shaft and pushes it back towards the outside of the ball screw nut.

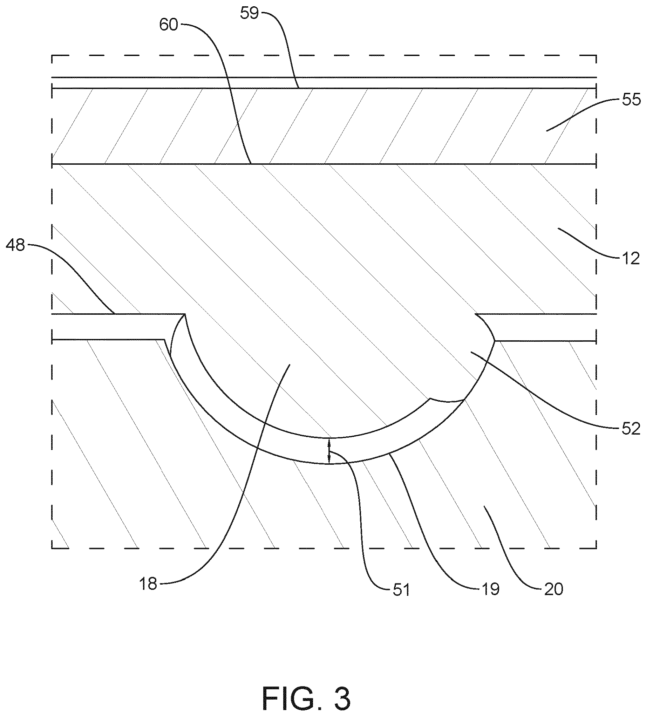

FIGURE 3 is an enlarged view of a portion of the cross section of FIG. 2 now better showing the small wiping bead that is of a different pitch in comparison to the main helical threads of the ball screw actuator.

The seal of the present invention is a modular design. The axial length can be adjusted to fit the space available, and an ice scraper can be stacked on the end (which is not shown). The number of counter threads can be adjusted to match the needs of the application. The thread pitch can be adjusted to match the needs of the application.

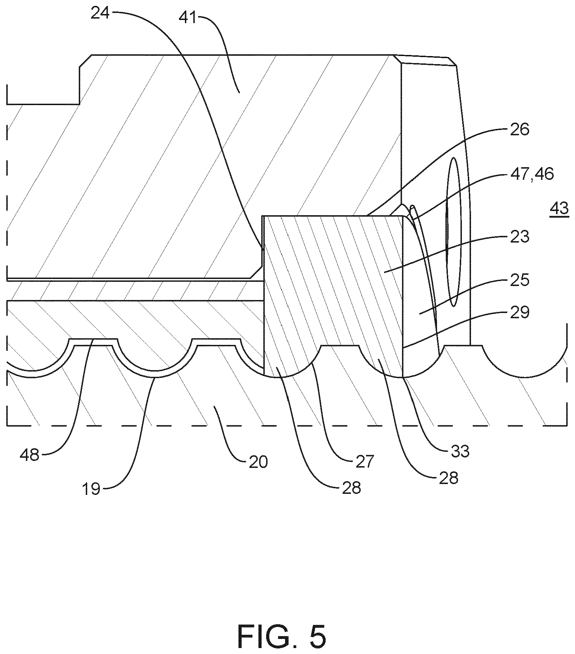

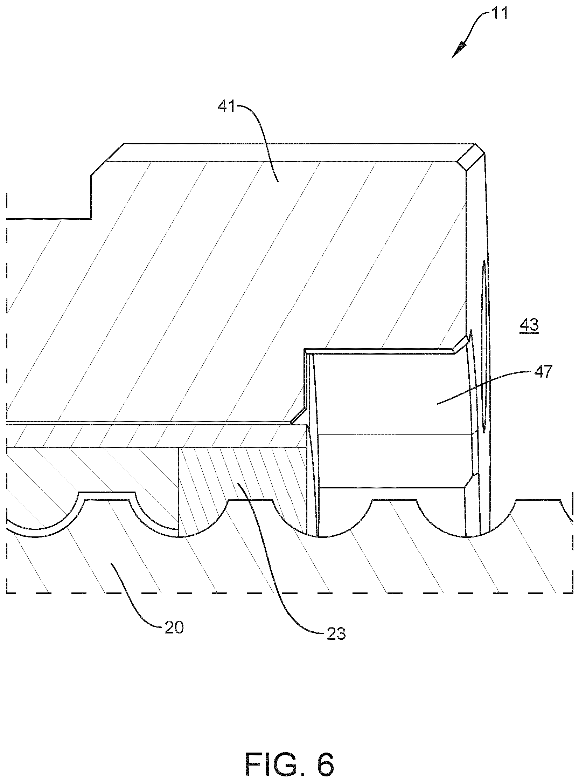

An ice scraper can be included. As noted above, it is stacked in series (see Figure 5) with seal to provide ice breaking capability. It can, also, be integrated within the metal sleeve to make it a "one-piece" assembly (See Figure 6).

There are several points of novelty of the present invention. There is the ability to provide an airtight seal to the ball screw shaft. Additionally, there is the ability to wipe grease off the shaft and push it back into the grease reservoir. Likewise, there is the ability to wipe dust and water off the shaft and push it back to the outside of the seal.

As can be appreciated, the metal sleeve has the elastomer bonded to the inner diameter. In harsh cold environments the elastomer will shrink faster than the steel sleeve and will reduce the interference on the shaft and reduce the torque required to turn the shaft. Because the elastomer is bonded to the metal sleeve the OD of the elastomer cannot move. The elastomer will shrink towards the "fixed" surface of the metal sleeve ID. The coefficient of thermal expansion (CTE) for elastomer is larger than for metal. Therefore, the ID of the seal will increase, and the torque will decrease as the temperature decreases.

There are differences between this present invention and prior art ball screw seals. Prior art seals: do not provide an air seal; do not effectively retain grease; do not effectively keep contamination out; and dramatically increase torque in extreme cold conditions.

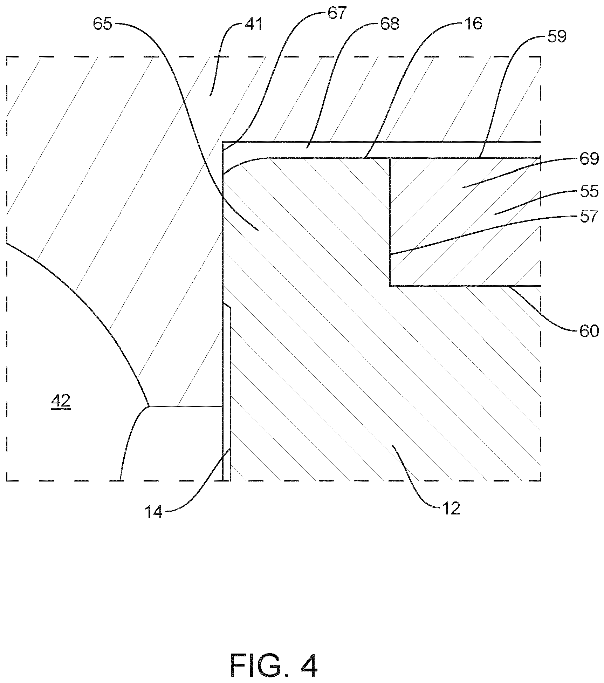

FIGURE 4 shows a small bead of elastomer on the axial face of the seal. This bead creates a static seal to prevent egress or ingress around the outer diameter of the seal when an axial force is applied to the seal to clamp it in place. The shape of the bead can vary depending on the manufacturing method.

Figures 1 and 2 shows a clocking mechanism at the top of each figure. The seal assembly must contain a lug (tab) or a notch to interact with the ball screw nut hardware. This lug or notch keeps the seal threads oriented, 'in-time', with the threads on the ball screw shaft and nut.

The shape of the wiping bead and static bead can vary from a full radius shown in figures 3 and 4 to a sharp, 'V', shape depending on the design requirements.

Reference is now being made to the figures of the present application which are very similar to the figures of the '572 provisional application. FIGURES 1-6 of the present application illustrate an embodiment of the present invention, which is a wiper seal assembly 10 configured for sealing a ball screw actuator 11. FIGURE 1 is an isometric view of an embodiment of a wiper seal assembly of the present invention. FIGURE 2 is a sectional view of the structure of FIG. 1 taken along lines 2-2. FIGURE 3 is an enlarged sectional view taken along lines 3-3 from FIG. 2 now showing the internal shaft of the ball screw actuator. FIGURE 4 is an enlarged sectional view taken along lines 4-4 from FIG. 2 now showing the outer housing of the ball screw actuator. FIGURE 5 is an enlarged sectional view of the structure of FIG. 1 now showing the internal shaft and outer housing of the ball screw actuator along with an ice breaker element. FIGURE 6 is an enlarged sectional view of the structure of FIG. 1 now showing another embodiment of the present invention having the internal shaft and outer housing of the ball screw actuator along with an ice breaker element.

A seal element 12 is annularly disposed about a longitudinal axis 13. The seal element defines a front side 14 opposite a back side 15, where the front and back sides are generally perpendicular to the longitudinal axis. The seal element also defines an outside circumferential surface 16 opposite an inside circumferential surface 17. The outside and inside circumferential surfaces are generally parallel with the longitudinal axis. The inside circumferential surface comprises a first helically shaped extension 18 having a first pitch 50 extending towards the longitudinal axis. The first helically shaped extension is configured to be disposed within a roller ball screw thread 19 of a shaft 20 of the ball screw actuator. The shaft is configured to be aligned along the longitudinal axis. A clearance 51 is configured to be between the first helically shaped extension and the roller ball screw thread.

The inside circumferential surface also comprises at least one wiping bead 52 being a second helically shaped extension 53 having a second pitch 54 extending towards the longitudinal axis. The at least one wiping bead is disposed at least partially over the first helically shaped extension. The at least one wiping bead is configured to make contact with the roller ball screw thread of the shaft of the ball screw actuator as best seen in FIG. 3.

A cylindrical ring 55 is annularly disposed about the longitudinal axis and extends a distance 56 along the longitudinal axis. The cylindrical ring defines a front side 57 opposite a back side 58, where the front and back sides are generally perpendicular to the longitudinal axis. The cylindrical ring defines an outside circumferential surface 59 opposite an inside circumferential surface 60, where the outside and inside circumferential surfaces being generally parallel with longitudinal axis. The cylindrical ring is in contact with and at least partially disposed about the seal element. The seal element is at least partially bonded to the cylindrical ring along this contact. Adhesion can be accomplished using bonding agents and/or adhesives. Bonding can also be accomplished using an overmold operation, where the seal element is molded with the cylindrical (metal) ring already placed within the mold.

According to a further embodiment, the seal element may have a first coefficient of thermal expansion 61 and the cylindrical ring may have a second coefficient of thermal expansion 62. The first coefficient of thermal expansion of the cylindrical ring may be larger than the second coefficient of thermal expansion of the cylindrical ring.

Alternatively, the seal element may be made of an elastomer. For example, the seal element may be made of fluorosilicone, fluorovinylmethylsiloxane rubber (FVMQ), nitrile (NBR), hydrogenated nitrile (HNBR), fluorocarbon (FKM), silicone (VMQ), liquid silicone resin (LSR), thermoplastic elastomer (TPE) and/or any combination thereof. The seal element may have a Shore A hardness range of 40 to 80.

Additionnaly, the cylindrical ring may be made of a metal. Alternatively, the cylindrical ring may be made of stainless steel, steel, aluminum, plastic and/or any combination thereof.

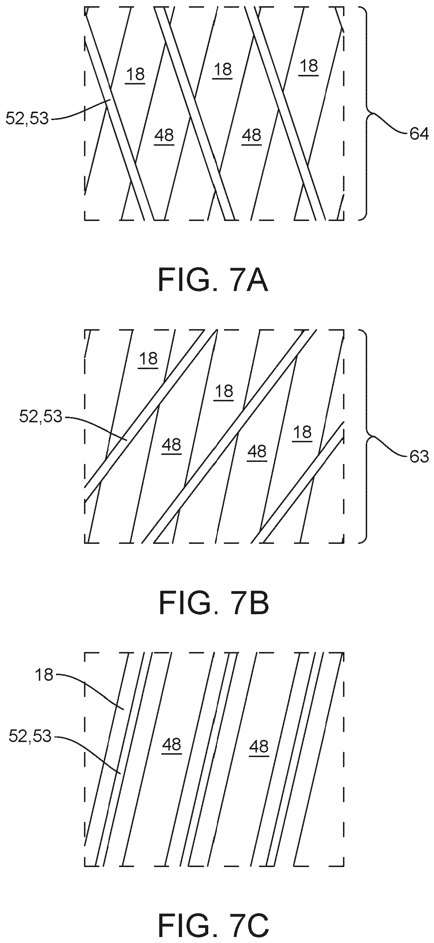

According to a further embodiment, the first pitch of the first helically shaped extension and second pitch of the second helically shaped extension may be different. This is best seen in FIG. 2, where it is clear to see that the pitches are different. The first pitch of the first helically shaped extension and the second pitch of the second helically shaped extension may be in an opposite helical direction 64 as shown in FIG. 2 and in FIG. 7A.

FIGURE 7A is a theoretical plan view of the inside circumferential surface of the seal element shown in FIG. 2, if the inside circumferential surface was cut open and laid flat. This then allows us to better understand how the two helical structures overlap one another. The first helically shaped extension 18 is shown having the first pitch with flat cylindrical portions 48 disposed therebetween. The at least one wiping bead 52 is of a second helically shaped extension 53 that is in an opposite helical direction 64.

FIGURE 7B is another theoretical plan view similar to FIG. 7A now showing that while the first and second helically shaped extensions have different pitches, they may be in a similar helical direction 63.

FIGURE 7C is another theoretical plan view similar to FIGS. 7A and &B, now showing that the first pitch of the first helically shaped extension and the second pitch of the second helically shaped extension may be the same pitch.

In other further embodiments as shown in FIGS 5 and 6, an ice breaker element 23 may be annularly disposed about the longitudinal axis. The ice breaker element defines a front side 24 opposite a back side 25, where the front and back sides are generally perpendicular to the longitudinal axis. The ice breaker element also defines an outside circumferential surface 26 opposite an inside circumferential surface 27, where the outside and inside circumferential surfaces are generally parallel with longitudinal axis.

The inside circumferential surface of the ice breaker comprises a third helically shaped extension 28 extending towards the longitudinal axis, wherein the third helically shaped extension is configured to be disposed within the roller ball screw thread of the shaft of the ball screw actuator. The third helically shaped extension extends to the front side of the ice breaker element forming an ice breaker lip 29.

When the ice breaker element is included, the seal element is disposed adjacent to the ice breaker element with the back side of the seal element being adjacent to the back side of the ice breaker element. It is understood from this teaching that the first helically shaped extension is helically aligned in comparison to the third helically shaped extension, wherein both the first and third helically shaped extensions are configured to be disposed within the roller ball screw thread of the shaft of the ball screw actuator. An edge 33 of the ice breaker lip is configured to be at or less than 0.005 inches (0.13 millimeters) from the roller ball screw thread of the shaft of the ball screw actuator. The seal element and the ice breaker element could be different materials, such that they are not the same materials. Furthermore, the ice breaker element may comprise aluminum bronze and/or stainless steel.

As best seen in FIGS. 2 and 4, an annular bead 65 may be disposed about the longitudinal axis and extending from the front side of the seal element. The annular bead is sealing against the vertical surface 67 of the housing, as an annular channel 68 is formed in the housing to receive the wiper seal assembly 10.

When the wiper seal assembly is installed between an outer housing 41 and the shaft of the ball screw actuator, the front side of the seal element is configured to be disposed towards a grease side 42 (See FIG. 4) and the rear side of the seal element is configured to be disposed towards an environmental side 43 (See FIGS. 5-6).

At least one clocking feature 66 may extend radially to the longitudinal axis from the outside circumferential surface of the cylindrical ring. The at least one clocking feature is configured to be disposed within at least one recess 47 formed in an outer housing 41 and mechanically locks in rotation the cylindrical ring and seal element in comparison to the outer housing.

Additionaly, at least one second clocking feature 46 may extend radially to the longitudinal axis from the outside circumferential surface of the ice breaker element. The at least one second clocking feature is configured to be disposed within the at least one recess 47 formed in the outer housing 41 and mechanically locks in rotation the ice breaker element in comparison to the outer housing. Alternatively, the ice breaker element could be rotational fixed relative to the wiper seal assembly, or vice versa. Furthermore, just one clocking feature is shown, but one, two, three, four or any number of clocking features and corresponding recesses could be used by those skilled in the art.

Referring to FIG.4, the embodiment shown illustrates how the cylindrical ring is disposed within an annular channel 69 formed in the seal element. This then allows the outside circumferential surface 16 of the seal element to align perfectly to the outside circumferential surface 59 of the cylindrical ring. It is understood by those skilled in the art that the annular channel 69 could be eliminated such that the inside circumferential surface 60 of the cylindrical ring would be bonded to the outside circumferential surface 16 of the seal element. Furthermore, as shown in FIGS. 2 and 5, the end 15 of the seal element and the end 58 of the cylindrical ring are aligned. Likewise, it will be understood by those skilled in the art that this is not required as each end could be extended or retracted depending on the needs of the present invention.

### Numerals:

- 10: wiper seal assembly
- 11: ball screw actuator
- 12: seal element
- 13: longitudinal axis
- 14: front side
- 15: back side
- 16: outside circumferential surface
- 17: inside circumferential surface
- 18: first helically shaped extension
- 19: roller ball screw thread
- 20: shaft
- 23: ice breaker element
- 24: front side
- 25: back side
- 26: outside circumferential surface
- 27: inside circumferential surface
- 28: third helically shaped extension
- 29: ice breaker lip
- 33: edge
- 41: outer housing
- 42: grease side
- 43: environmental side
- 46: at least one second clocking feature, ice breaker element
- 47: at least one recess
- 48: flat cylindrical portion
- 50: first pitch, first helically shaped extension
- 51: clearance
- 52: at least one wiping bead
- 53: a second helically shaped extension
- 54: second pitch
- 55: a cylindrical ring
- 56: distance, cylindrical ring
- 57: front side, cylindrical ring
- 58: back side, cylindrical ring
- 59: outside circumferential surface, cylindrical ring
- 60: inside circumferential surface, cylindrical ring
- 61: first coefficient of thermal expansion, seal element
- 62: second coefficient of thermal expansion, cylindrical ring
- 63: similar helical direction
- 64: opposite helical direction
- 65: annular bead
- 66: at least one clocking feature, cylindrical ring
- 67: vertical surface, housing
- 68: annular channel, housing
- 69: annular channel, seal element

## Claims

1. A wiper seal assembly (10) for sealing a ball screw actuator (11), comprising:
a roller ball screw thread (19) of a shaft (20) of the ball screw actuator (11);
a seal element (12) annularly disposed about a longitudinal axis (13);
the seal element (12) defining a front side (14) opposite a back side (15), the front and back sides (14, 15) being generally perpendicular to the longitudinal axis (13);
the seal element (12) defining an outside circumferential surface (16) opposite an inside circumferential surface (17), the outside and inside circumferential surfaces(16, 17) being generally parallel with the longitudinal axis (13);
wherein the inside circumferential surface (17) comprises a first helically shaped extension (18) having a first pitch (50) extending towards the longitudinal axis (13), wherein the first helically shaped extension (18) is disposed within the roller ball screw thread (19) of the shaft (20) of the ball screw actuator (11), wherein the shaft (20) is aligned along the longitudinal axis (13);
a cylindrical ring (55) annularly disposed about the longitudinal axis (13) and extending a distance (56) along the longitudinal axis (13);
the cylindrical ring (55) defining a front side (57) opposite a back side (58), the front and back sides (57, 58) being generally perpendicular to the longitudinal axis (13);
the cylindrical ring (55) defining an outside circumferential surface (59) opposite an inside circumferential surface (60), the outside and inside circumferential surfaces (59, 60) being generally parallel with longitudinal axis (13);
wherein the cylindrical ring (55) is in contact with and at least partially disposed about the seal element (12); and
wherein the seal element (12) is at least partially bonded to the cylindrical ring (55),
**characterized in that** the wiper seal assembly further includes a clearance (51) between the first helically shaped extension (18) and the roller ball screw thread (19),
and **in that** the inside circumferential surface (17) comprises at least one wiping bead (52) being a second helically shaped extension (53) having a second pitch (54) extending towards the longitudinal axis (13), the at least one wiping bead (52) disposed at least partially over the first helically shaped extension (18), wherein the at least one wiping bead (52) makes contact with the roller ball screw thread (19) of the shaft (20) of the ball screw actuator (11).

2. The wiper seal assembly (10) of claim 1, wherein the seal element (12) has a first coefficient of thermal expansion (61) and the cylindrical ring (55) has a second coefficient of thermal expansion (62), preferably the first coefficient of thermal expansion (61) of the seal element (12) is larger than the second coefficient of thermal expansion (62) of the cylindrical ring (55).

3. The wiper seal assembly (10) of claim 1, wherein the seal element (12) is made of an elastomer, preferably the seal element (12) is made of fluorosilicone, fluorovinylmethylsiloxane rubber (FVMQ), nitrile (NBR), hydrogenated nitrile (HNBR), fluorocarbon (FKM), silicone (VMQ), liquid silicone resin (LSR), thermoplastic elastomer (TPE) and/or any combination thereof.

4. The wiper seal assembly (10) of claim 3, wherein the seal element (12) has a Shore A hardness range of 40 to 80, or wherein the cylindrical ring (55) is made of a metal, or wherein the cylindrical ring (55) is made of stainless steel, steel, aluminum, plastic and/or any combination thereof.

5. The wiper seal assembly (10) of claim 1, wherein the first pitch (50) of the first helically shaped extension (18) and second pitch (54) of the second helically shaped extension (53) are different.

6. The wiper seal assembly (10) of claim 1, wherein the first pitch (50) of the first helically shaped extension (18) and the second pitch (54) of the second helically shaped extension (53) are in a similar helical direction.

7. The wiper seal assembly (10) of claim 1, wherein the first pitch (50) of the first helically shaped extension (18) and the second pitch (54) of the second helically shaped extension (53) are in an opposite helical direction.

8. The wiper seal assembly (10) of claim 1, wherein the first pitch (50) of the first helically shaped extension (18) and the second pitch (54) of the second helically shaped extension (53) are the same.

9. The wiper seal assembly (10) of claim 1, including an ice breaker element (23) annularly disposed about the longitudinal axis (13), the ice breaker element (23) defining a front side (24) opposite a back side (25), the front and back sides (24, 25) being generally perpendicular to the longitudinal axis (13), the ice breaker element (23) defining an outside circumferential surface (26) opposite an inside circumferential surface (27), the outside and inside circumferential surfaces (26, 27) being generally parallel with longitudinal axis (13), wherein the inside circumferential surface (27) comprises a third helically shaped extension (28) extending towards the longitudinal axis (13), wherein the third helically shaped extension (28) is disposed within the roller ball screw thread (19) of the shaft (20) of the ball screw actuator (11), wherein the third helically shaped extension (28) extends to the front side (24) of the ice breaker element (23) forming an ice breaker lip (29), and wherein the seal element (12) is disposed adjacent to the ice breaker element (23) with the back side (15) of the seal element (12) being adjacent to the back side (25) of the ice breaker element (23).

10. The wiper seal assembly (10) of claim 9, wherein the first helically shaped extension (18) is helically aligned in comparison to the third helically shaped extension (28), wherein both the first and third helically shaped extensions (18, 28) are disposed within the roller ball screw thread (19) of the shaft (20) of the ball screw actuator (11).

11. The wiper seal assembly (10) of claim 9, wherein an edge (33) of the ice breaker lip (29) is at or less than 0.005 inches from the roller ball screw thread (19) of the shaft (20) of the ball screw actuator (11).

12. The wiper seal assembly (10) of claim 9, wherein the seal element (12) and the ice breaker element (23) are not made of the same materials, wherein the ice breaker element (23) comprises aluminum bronze and/or stainless steel.

13. The wiper seal assembly (10) of claim 1, including an annular bead (65) disposed about the longitudinal axis (13) and extending from the front side (14) of the seal element (12).

14. The wiper seal assembly (10) of claim 1, wherein, when the wiper seal assembly (10) is installed between an outer housing (41) and the shaft (20) of the ball screw actuator (11), the front side (14) of the seal element (12) is disposed towards a grease side (42) and the back side (15) of the seal element (12) is disposed towards an environmental side (43).

15. The wiper seal assembly (10) of claim 1, including at least one clocking feature (66) extending radially to the longitudinal axis (13) from the outside circumferential surface (59) of the cylindrical ring (55), wherein the at least one clocking feature (66) is configured to be disposed within at least one recess (47) formed in an outer housing (41) and mechanically locks in rotation the cylindrical ring (55) and seal element (12) in comparison to the outer housing (41).

16. The wiper seal assembly (10) of claim 13, including at least one second clocking feature (46) extending radially to the longitudinal axis (13) from the outside circumferential surface (26) of the ice breaker element (23), wherein the at least one second clocking feature (46) is disposed within the at least one recess (47) formed in the outer housing (41) and mechanically locks in rotation the ice breaker element (23) in comparison to the outer housing (41).

## Patentansprüche

1. Abstreiferdichtungsanordnung (10) zum Abdichten eines Kugelgewindetriebs (11), umfassend:
ein Rollkugel-Schraubgewinde (19) einer Welle (20) des Kugelgewindetriebs (11);
ein ringförmig um eine Längsachse (13) angeordnetes Dichtungselement (12);
wobei das Dichtungselement (12) eine Vorderseite (14) gegenüber einer Rückseite (15) definiert, wobei die Vorderseite und die Rückseite (14, 15) im Allgemeinen rechtwinklig zur Längsachse (13) verlaufen;
wobei das Dichtungselement (12) eine äußere Umfangsfläche (16) gegenüber einer inneren Umfangsfläche (17) definiert, wobei die äußere und die innere Umfangsfläche (16, 17) im Allgemeinen parallel zur Längsachse (13) verlaufen;
wobei die innere Umfangsfläche (17) eine erste spiralförmige Verlängerung (18) mit einer ersten Gewindesteigung (50) aufweist, die sich in Richtung der Längsachse (13) erstreckt, wobei die erste spiralförmige Verlängerung (18) innerhalb des Rollkugel-Schraubgewindes (19) der Welle (20) des Kugelgewindetriebs (11) angeordnet ist, wobei die Welle (20) entlang der Längsachse (13) ausgerichtet ist;
einen zylindrischen Ring (55), der ringförmig um die Längsachse (13) angeordnet ist und sich über einen Abstand (56) entlang der Längsachse (13) erstreckt;
wobei der zylindrische Ring (55) eine Vorderseite (57) gegenüber einer Rückseite (58) definiert, wobei die Vorderseite und die Rückseite (57, 58) im Allgemeinen rechtwinklig zur Längsachse (13) verlaufen;
wobei der zylindrische Ring (55) eine äußere Umfangsfläche (59) gegenüber einer inneren Umfangsfläche (60) definiert, wobei die äußere und die innere Umfangsfläche (59, 60) im Allgemeinen parallel zur Längsachse (13) verlaufen;
wobei der zylindrische Ring (55) mit dem Dichtungselement (12) in Kontakt ist und zumindest teilweise um dieses angeordnet ist; und
wobei das Dichtungselement (12) zumindest teilweise mit dem zylindrischen Ring (55) verbunden ist,
**dadurch gekennzeichnet,**
**dass** die Abstreiferdichtungsanordnung weiterhin einen Zwischenraum (51) zwischen der ersten spiralförmigen Verlängerung (18) und dem Rollkugel-Schraubgewinde (19) umfasst, und
**dass** die innere Umfangsfläche (17) mindestens einen Abstreifwulst (52) aufweist, der eine zweite spiralförmige Verlängerung (53) mit einer zweiten Gewindesteigung (54) darstellt, die sich in Richtung der Längsachse (13) erstreckt, wobei der mindestens eine Abstreifwulst (52) zumindest teilweise über der ersten spiralförmigen Verlängerung (18) angeordnet ist, wobei der mindestens eine Abstreifwulst (52) mit dem Rollkugel-Schraubgewinde (19) der Welle (20) des Kugelgewindetriebs (11) in Kontakt kommt.

2. Abstreiferdichtungsanordnung (10) nach Anspruch 1, wobei das Dichtungselement (12) einen ersten Wärmeausdehnungskoeffizienten (61) hat und der zylindrische Ring (55) einen zweiten Wärmeausdehnungskoeffizienten (62) hat, wobei der erste Wärmeausdehnungskoeffizient (61) des Dichtungselements (12) vorzugsweise größer ist als der zweite Wärmeausdehnungskoeffizient (62) des zylindrischen Rings (55).

3. Abstreiferdichtungsanordnung (10) nach Anspruch 1, wobei das Dichtungselement (12) aus einem Elastomer gefertigt ist, wobei das Dichtungselement (12) vorzugsweise aus Fluorsilikon, Fluorvinylmethylsiloxangummi (FVMQ), Nitril (NBR), hydriertes Nitril (HNBR), Fluorkohlenstoff (FKM), Silikon (VMQ), flüssiges Silikonharz (LSR), thermoplastisches Elastomer (TPE) und/oder einer beliebigen Kombination davon gefertigt ist.

4. Abstreiferdichtungsanordnung (10) nach Anspruch 3, wobei das Dichtungselement (12) einen Shore A Härtebereich von 40 bis 80 aufweist, oder wobei der zylindrische Ring (55) aus einem Metall gefertigt ist, oder wobei der zylindrische Ring (55) aus Edelstahl, Stahl, Aluminium, Kunststoff und/oder einer beliebigen Kombination davon gefertigt ist.

5. Abstreiferdichtungsanordnung (10) nach Anspruch 1, wobei die erste Gewindesteigung (50) der ersten spiralförmigen Verlängerung (18) und die zweite Gewindesteigung (54) der zweiten spiralförmigen Verlängerung (53) unterschiedlich sind.

6. Abstreiferdichtungsanordnung (10) nach Anspruch 1, wobei die erste Gewindesteigung (50) der ersten spiralförmigen Verlängerung (18) und die zweite Gewindesteigung (54) der zweiten spiralförmigen Verlängerung (53) in einer ähnlichen spiralförmigen Richtung verlaufen.

7. Abstreiferdichtungsanordnung (10) nach Anspruch 1, wobei die erste Gewindesteigung (50) der ersten spiralförmigen Verlängerung (18) und die zweite Gewindesteigung (54) der zweiten spiralförmigen Verlängerung (53) in entgegengesetzten spiralförmigen Richtungen verlaufen.

8. Abstreiferdichtungsanordnung (10) nach Anspruch 1, wobei die erste Gewindesteigung (50) der ersten spiralförmigen Verlängerung (18) und die zweite Gewindesteigung (54) der zweiten spiralförmigen Verlängerung (53) identisch sind.

9. Abstreiferdichtungsanordnung (10) nach Anspruch 1, mit einem Eisbrecherelement (23), das ringförmig um die Längsachse (13) angeordnet ist, wobei das Eisbrecherelement (23) eine Vorderseite (24) gegenüber einer Rückseite (25) definiert, wobei die Vorderseite und die Rückseite (24, 25) im Allgemeinen rechtwinklig zur Längsachse (13) verlaufen, wobei das Eisbrecherelement (23) eine äußere Umfangsfläche (26) gegenüber einer inneren Umfangsfläche (27) definiert, wobei die äußere und die innere Umfangsfläche (26, 27) im Allgemeinen parallel zur Längsachse (13) verlaufen, wobei die innere Umfangsfläche (27) eine dritte spiralförmige Verlängerung (28) aufweist, die sich in Richtung der Längsachse (13) erstreckt, wobei die dritte spiralförmige Verlängerung (28) innerhalb des Rollkugel-Schraubgewindes (19) der Welle (20) des Kugelgewindetriebs (11) angeordnet ist, wobei die dritte spiralförmige Verlängerung (28) sich zur Vorderseite (24) des Eisbrecherelements (23) erstreckt und eine Eisbrecherlippe (29) bildet und wobei das Dichtungselement (12) neben dem Eisbrecherelement (23) angeordnet ist, wobei die Rückseite (15) des Dichtungselements (12) neben der Rückseite (25) des Eisbrecherelements (23) angeordnet ist.

10. Abstreiferdichtungsanordnung (10) nach Anspruch 9, wobei die erste spiralförmige Verlängerung (18) spiralförmig gegenüber der dritten spiralförmigen Verlängerung (28) ausgerichtet ist, wobei sowohl die erste als auch die dritte spiralförmige Verlängerung (18, 28) innerhalb des Rollkugel-Schraubgewindes (19) der Welle (20) des Kugelgewindetriebs (11) angeordnet sind.

11. Abstreiferdichtungsanordnung (10) nach Anspruch 9, wobei ein Rand (33) der Eisbrecherlippe (29) 0,005 Inch oder weniger von dem Rollkugel-Schraubgewinde (19) der Welle (20) des Kugelgewindetriebs (11) entfernt ist.

12. Abstreiferdichtungsanordnung (10) nach Anspruch 9, wobei das Dichtungselement (12) und das Eisbrecherelement (23) nicht aus denselben Materialien gefertigt sind, wobei das Eisbrecherelement (23) Aluminiumbronze und/oder Edelstahl aufweist.

13. Abstreiferdichtungsanordnung (10) nach Anspruch 1, mit einem ringförmigen Wulst (65), der um die Längsachse (13) herum angeordnet ist und sich von der Vorderseite (14) des Dichtungselements (12) erstreckt.

14. Abstreiferdichtungsanordnung (10) nach Anspruch 1, wobei, wenn die Abstreiferdichtungsanordnung (10) zwischen einem äußeren Gehäuse (41) und der Welle (20) des Kugelgewindetriebs (11) eingebaut ist, die Vorderseite (14) des Dichtungselements (12) in Richtung einer Fettseite (42) angeordnet ist und die Rückseite (15) des Dichtungselements (12) in Richtung einer Umgebungsseite (43) angeordnet ist.

15. Abstreiferdichtungsanordnung (10) nach Anspruch 1, mit mindestens einer Taktungseinrichtung (66), die sich radial zur Längsachse (13) von der äußeren Umfangsfläche (59) des zylindrischen Rings (55) erstreckt, wobei die mindestens eine Taktungseinrichtung (66) so ausgebildet ist, dass sie in mindestens einer Aussparung (47) angeordnet werden kann, die in einem äußeren Gehäuse (41) gebildet ist, und den zylindrischen Ring (55) und das Dichtungselement (12) gegenüber dem äußeren Gehäuse (41) mechanisch drehfixieren.

16. Abstreiferdichtungsanordnung (10) nach Anspruch 13, mit mindestens einer zweiten Taktungseinrichtung (46), die sich radial zur Längsachse (13) von der äußeren Umfangsfläche (26) des Eisbrecherelements (23) erstreckt, wobei die mindestens zweite Taktungseinrichtung (46) in der mindestens einen Aussparung (47) angeordnet ist, die in dem äußeren Gehäuse (41) gebildet ist, und das Eisbrecherelement (23) gegenüber dem äußeren Gehäuse (41) mechanisch drehfixieren.

## Revendications

1. Ensemble de joint racleur (10) pour l'étanchéité d'un actionneur à vis à billes (11), comprenant :
un filet de vis à billes roulé (19) d'un arbre (20) de l'actionneur à vis à billes (11) ;
un élément de joint (12) disposé de manière annulaire autour d'un axe longitudinal (13) ;
l'élément de joint (12) définissant une face avant (14) opposée à une face arrière (15), les faces avant et arrière (14, 15) étant généralement perpendiculaires à l'axe longitudinal (13) ;
l'élément de joint (12) définissant une surface circonférentielle externe (16) opposée à une surface circonférentielle interne (17), les surfaces circonférentielles externe et interne (16, 17) étant généralement parallèles à l'axe longitudinal (13) ;
dans lequel la surface circonférentielle interne (17) comprend une première extension hélicoïdale (18) ayant un premier pas (50) s'étendant vers l'axe longitudinal (13),
dans lequel la première extension hélicoïdale (18) est disposée à l'intérieur du filet de vis à billes roulé (19) de l'arbre (20) de l'actionneur à vis à billes (11), dans lequel l'arbre (20) est aligné le long de l'axe longitudinal (13) ;
une bague cylindrique (55) disposée de manière annulaire autour de l'axe longitudinal (13) et s'étendant sur une distance (56) le long de l'axe longitudinal (13) ;
la bague cylindrique (55) définissant une face avant (57) opposée à une face arrière (58), les faces avant et arrière (57, 58) étant généralement perpendiculaires à l'axe longitudinal (13) ;
la bague cylindrique (55) définissant une surface circonférentielle externe (59) opposée à une surface circonférentielle interne (60), les surfaces circonférentielles externe et interne (59, 60) étant généralement parallèles à l'axe longitudinal (13) ;
dans lequel la bague cylindrique (55) est en contact avec et au moins partiellement disposée autour de l'élément de joint (12) ; et
dans lequel l'élément de joint (12) est au moins partiellement lié à la bague cylindrique (55),
**caractérisé en ce que** l'ensemble de joint racleur comprend en outre un jeu (51) entre la première extension hélicoïdale (18) et le filet de vis à billes roulé (19),
et **en ce que**
la surface circonférentielle interne (17) comprend au moins un bourrelet de raclage (52) étant une seconde extension hélicoïdale (53) ayant un second pas (54)
s'étendant vers l'axe longitudinal (13), le ou les bourrelets de raclage (52) étant disposés au moins partiellement sur la première extension hélicoïdale (18), dans lequel le ou les bourrelets de raclage (52) sont en contact avec le filet de vis à billes roulé (19) de l'arbre (20) de l'actionneur à vis à billes (11).

2. Ensemble de joint racleur (10) selon la revendication 1, dans lequel l'élément de joint (12) présente un premier coefficient de dilatation thermique (61) et la bague cylindrique (55) présente un second coefficient de dilatation thermique (62), de préférence le premier coefficient de dilatation thermique (61) de l'élément de joint (12) est supérieur au second coefficient de dilatation thermique (62) de la bague cylindrique (55).

3. Ensemble de joint racleur (10) selon la revendication 1, dans lequel l'élément de joint (12) est constitué d'un élastomère, de préférence l'élément de joint (12) est constitué de fluorosilicone, de caoutchouc fluorovinylméthylsiloxane (FVMQ), de nitrile (NBR), de nitrile hydrogéné (HNBR), de fluorocarbone (FKM), de silicone (VMQ), de résine de silicone liquide (LSR), d'élastomère thermoplastique (TPE) et/ou de toute combinaison de ceux-ci.

4. Ensemble de joint racleur (10) selon la revendication 3, dans lequel l'élément de joint (12) présente une plage de dureté Shore A de 40 à 80, ou lequel la bague cylindrique (55) est constituée d'un métal, ou dans lequel la bague cylindrique (55) est constituée d'acier inoxydable, d'acier, d'aluminium, de plastique et/ou de toute combinaison de ceux-ci.

5. Ensemble de joint racleur (10) selon la revendication 1, dans lequel le premier pas (50) de la première extension hélicoïdale (18) et le second pas (54) de la seconde extension hélicoïdale (53) sont différents.

6. Ensemble de joint racleur (10) selon la revendication 1, dans lequel le premier pas (50) de la première extension hélicoïdale (18) et le second pas (54) de la seconde extension hélicoïdale (53) sont dans une direction hélicoïdale similaire.

7. Ensemble de joint racleur (10) selon la revendication 1, dans lequel le premier pas (50) de la première extension hélicoïdale (18) et le second pas (54) de la seconde extension hélicoïdale (53) sont dans une direction hélicoïdale opposée.

8. Ensemble de joint racleur (10) selon la revendication 1, dans lequel le premier pas (50) de la première extension hélicoïdale (18) et le second pas (54) de la seconde extension hélicoïdale (53) sont identiques.

9. Ensemble de joint racleur (10) selon la revendication 1, comprenant un élément brise-glace (23) disposé de manière annulaire autour de l'axe longitudinal (13), l'élément brise-glace (23) définissant une face avant (24) opposée à une face arrière (25), les faces avant et arrière (24, 25) étant généralement perpendiculaires à l'axe longitudinal (13), l'élément brise-glace (23) définissant une surface circonférentielle externe (26) opposée à une surface circonférentielle interne (27), les surfaces circonférentielles externe et interne (26, 27) étant généralement parallèles à l'axe longitudinal (13), dans lequel la surface circonférentielle interne (27) comprend une troisième extension hélicoïdale (28) s'étendant vers l'axe longitudinal (13), dans lequel la troisième extension hélicoïdale (28) est disposée à l'intérieur du filet de vis à billes roulé (19) de l'arbre (20) de l'actionneur à vis à billes (11), dans lequel la troisième extension hélicoïdale (28) s'étend jusqu'à la face avant (24) de l'élément brise-glace (23) formant une lèvre brise-glace (29), et dans lequel l'élément de joint (12) est disposé adjacent à l'élément brise-glace (23) avec la face arrière (15) de l'élément de joint (12) étant adjacente à la face arrière (25) de l'élément brise-glace (23).

10. Ensemble de joint racleur (10) selon la revendication 9, dans lequel la première extension hélicoïdale (18) est alignée hélicoïdalement par rapport à la troisième extension hélicoïdale (28), dans lequel les première et troisième extensions hélicoïdales (18, 28) sont toutes deux disposées à l'intérieur du filet de vis à billes roulé (19) de l'arbre (20) de l'actionneur à vis à billes (11).

11. Ensemble de joint racleur (10) selon la revendication 9, dans lequel un bord (33) de la lèvre brise-glace (29) est à une distance inférieure ou égale à 0,005 pouces du filet de vis à billes roulé (19) de l'arbre (20) de l'actionneur à vis à billes (11).

12. Ensemble de joint racleur (10) selon la revendication 9, dans lequel l'élément de joint (12) et l'élément brise-glace (23) ne sont pas constitués des mêmes matériaux,dans lequel l'élément brise-glace (23) comprend du bronze aluminium et/ou de l'acier inoxydable.

13. Ensemble de joint racleur (10) selon la revendication 1, comprenant un bourrelet annulaire (65) disposé autour de l'axe longitudinal (13) et s'étendant depuis la face avant (14) de l'élément de joint (12).

14. Ensemble de joint racleur (10) selon la revendication 1, dans lequel, lorsque l'ensemble de joint racleur (10) est installé entre un carter externe (41) et l'arbre (20) de l'actionneur à vis à billes (11), la face avant (14) de l'élément de joint (12) est disposée vers un côté graisse (42) et la face arrière (15) de l'élément de joint (12) est disposée vers un côté environnemental (43).

15. Ensemble de joint racleur (10) selon la revendication 1, comprenant au moins un dispositif d'indexation (66) s'étendant radialement à l'axe longitudinal (13) depuis la surface circonférentielle externe (59) de la bague cylindrique (55), dans lequel le ou les dispositifs d'indexation (66) sont configurés pour être disposés dans au moins un évidement (47) formé dans un carter externe (41) et verrouille mécaniquement en rotation la bague cylindrique (55) et l'élément de joint (12) par rapport au carter externe (41).

16. Ensemble de joint racleur (10) selon la revendication 13, comprenant au moins un second dispositif d'indexation (46) s'étendant radialement à l'axe longitudinal (13) depuis la surface circonférentielle externe (26) de l'élément brise-glace (23), dans lequel le ou les seconds dispositifs d'indexation (46) sont disposés dans le ou les évidements (47) formés dans le carter externe (41) et verrouille mécaniquement en rotation l'élément brise-glace (23) par rapport au carter externe (41).
